(19) Europäisches Patentamt / European Patent Office / Office européen des brevets

(11) **EP 0 762 782 B1**

(12) **EUROPEAN PATENT SPECIFICATION**

(45) Date of publication and mention
of the grant of the patent:
**16.04.2008   Bulletin 2008/16**

(51) Int Cl.:
*H04N 9/64* *(2006.01)*      *H04N 9/66* *(2006.01)*

(21) Application number: **96113923.5**

(22) Date of filing: **30.08.1996**

(54) **Color demodulation for digital television**

Farbdemodulation für digitales Fernsehen

Démodulation de couleur pour télévision numérique

(84) Designated Contracting States:
**DE FR GB IT NL**

(30) Priority: **31.08.1995   US 3045**

(43) Date of publication of application:
**12.03.1997   Bulletin 1997/11**

(73) Proprietor: **Texas Instruments Incorporated
Dallas, Texas 75265 (US)**

(72) Inventor: **Marshall, Stephen W.
Richardson, TX 75080 (US)**

(74) Representative: **Degwert, Hartmut et al
Prinz & Partner GbR
Rundfunkplatz 2
80335 München (DE)**

(56) References cited:
**GB-A- 2 179 521          US-A- 4 700 217
US-A- 5 347 321**

**Description**

TECHNICAL FIELD OF THE INVENTION

This invention relates to digital television receivers that receive composite television signals, and more particularly to providing color-separated pixel data from the television signal.

The invention relates especially to a chrominance sampling and demodulation unit for a receiver of a composite video signal having a quadrature-modulated color subcarrier signal and to a method of providing color difference data in such a receiver.

BACKGROUND OF THE INVENTION

In many television broadcast signals, notably those adhering to the NTSC and PAL standards, there is a defined relationship between the horizontal line frequency ($F_h$) and the color subcarrier frequency ($F_{sc}$). For example, in NTSC signals, luminance and chrominance are transmitted in a single channel by using a chrominance subcarrier at 3.58 MHz, which is equal to the line frequency, 15,734.26 Hz, times 455/2. At the television receiver, the chrominance subcarrier provides a reference signal for separating chrominance from luminance (color separation) and for separating the chrominance components (demodulation).

In digital television systems that follow NTSC standards, typical digital color separation algorithms call for a sampling rate that is some multiple of the 3.58 MHz subcarrier frequency. A commonly used sampling rate is approximately 14.318 MHz, referred to as the "4 $f_{sc}$" rate. This sampling rate provides chrominance samples that are quadrature spaced. For demodulation, all that is left to do is to separate even and odd samples into two paths and low pass filter them. The even samples are pixel values for one color component and the odd samples are pixel values for the other.

A problem with the 4 $f_{sc}$ sampling rate is that it is not always consistent with the sampling rate required for a desired number of pixels per line (horizontal resolution). For example, for a 480 line display with a 4:3 aspect ratio, 640 pixels per line are required. Yet, a 4 $f_{sc}$ sample rate yields about 747 active samples per line. For a square pixel display with a one-to-one pixel to sample ratio, this is a distortion ratio of 16.7%.

Some existing systems provide the required number of samples per line by first sampling the incoming composite signal at 4 $f_{sc}$ and then scaling the samples to the desired number of samples per line. However, a problem with scaling is that visual artifacts are likely to occur. Also, the increased complexity of such systems makes them more costly.

U.S. Patent No. 5,347,321, entitled "Color Separator for Digital Television System", assigned to Texas Instruments Incorporated, describes one solution to color separation and sampling. The luminance and chrominance signals are separated before sampling. The luminance signal is sampled at a rate appropriate for the desired horizontal resolution, thereby eliminating the need for scaling luminance data. The chrominance signal is sampled at 4 $f_{sc}$ so that the color components can be easily separated, and then the samples are scaled.

U.S. Patent No. 4,700,217 discloses a chrominance signal demodulation circuitry for use in a digital television signal processing system. The frequency of the sampling clock signal is nominally four times the frequency of the color subcarrier signal. Two multipliers demodulate the chrominance band signals along two quadrature phase-related demodulation axes to develop two base band color difference signals.

SUMMARY OF THE INVENTION

One aspect of the invention is a chrominance sampling and demodulation unit for a receiver of a composite video signal having a quadrature-modulated color subcarrier signal with the features of claim 1. Well known examples of such signals are television signals adhering to the NTSC or PAL standards.

The chrominance sampling and demodulation unit is characterized by the phase reference values provided by the signal source. Each representing a phase relationship between a sample of the chrominance data and the subcarrier signal determined by accumulating a phase increment which corresponds to the ratio of the first integer number to the second integer number plus or minus 0.25. The invention further provides a method of providing color difference data in a receiver of a video signal having a quadrature-modulated color subcarrier signal comprising the steps of claim 13. The method is characterised by the step of accumulating a phase increment corresponding to the ratio of the first integer number to the second integer number plus or minus 0.25 to determine the phase reference values.

An advantage of the invention is that it provides color-separated pixel data from a composite video signal in a simple and straightforward manner. At the same time, the sampling frequency can be varied to satisfy the horizontal resolution requirements for various display formats. Any sampling frequency that meets the above requirements is suitable. For a given horizontal resolution, the sampling frequency is selected by calculating the qualifying sampling frequency that is closest to a target frequency that will produce a desired number of samples per lines.

BRIEF DESCRIPTION OF THE DRAWINGS

FIGURE 1 is a block diagram of video-related components of a digital television receiver, having a sampling and separation unit in accordance with the invention.

FIGURE 2 is a block diagram of the sampling and separation unit of FIGURE 1.

FIGURE 2A is an alternative embodiment of the sampling and separation unit of FIGURE 1.

FIGURE 3 illustrates how sampling frequencies are selected in accordance with the invention.

FIGURE 4 illustrates samples acquired in accordance with the invention, and their phase relationship to the color subcarrier signal.

FIGURE 5 illustrates the signal source, look-up table, and demodulator of FIGURE 2 in further detail.

DETAILED DESCRIPTION OF THE INVENTION

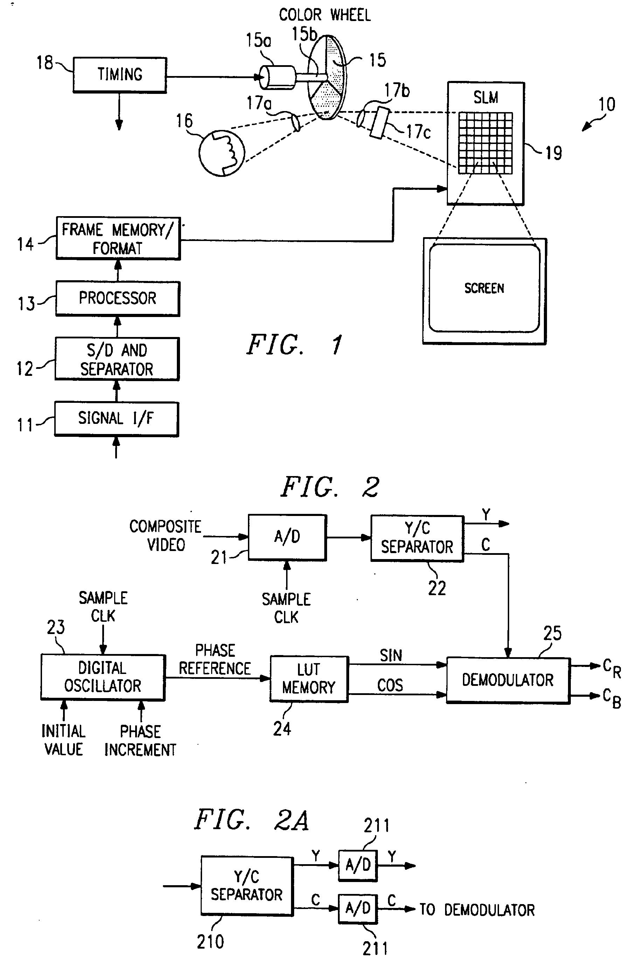

FIGURE 1 illustrates digital data path components of a digital display system 10. It should be understood that only components used for obtaining and displaying pixel data are shown; components used for tasks such as synchronization and audio signal processing are not shown. Finally, although the following description is in terms of a display system 10 for a broadcast television signal, it should be understood that display system 10 could be any type of equipment for receiving an analog composite video signal and displaying or storing images represented by the signal.

Display system 10 uses a spatial light modulator, in particular, a digital micro-mirror device 19, for generating displays. This device is explained in further detail below, but could be replaced by other pixel array devices. The invention is directed to a sampling and color separation unit 12, which samples a composite video signal in a manner that facilitates color separation, including demodulation of chrominance data into color difference data. Although not shown in FIGURE 1, sampling and separation unit 12 could be used with a digital display system that has a cathode ray tube (CRT) display instead of SLM 19. For such systems, the data is converted back to analog form and scanned to the CRT instead of being delivered to SLM 19.

The following overview of the various components of display system 10 provides details helpful to understanding of the invention. Further details pertaining to a DMD-based image display system are set out in U.S. Patent No. 5,079,544, entitled "Standard Independent Digitized Video System"; U.S. Patent No.5,526,051, entitled "Digital Television System"; and in U.S. Patent No.5,452,024, entitled "DMD Display System". Each of these patents is assigned to Texas Instruments Incorporated, and each is incorporated herein by reference.

The video input may be any analog composite signal having chrominance and luminance components. The luminance component is referred to herein as the "Y" component, and the chrominance component as the "C" component. The C component is comprised of two color difference signals, for example, $C_R$ and $C_B$. The chrominance signal is amplitude and phase modulated on a color subcarrier, for example, the 3.58 MHz subcarrier used for NTSC signals.

For purposes of this description, it is assumed that the sampling frequency for conventional digital color separation is not necessarily the same as the sampling frequency that will provide the desired number of samples per line. For example, as discussed in the Background, in an NTSC system, a 4 $f_{sc}$ sampling frequency does not necessarily provide the desired number of samples per line for a 4:3 aspect ratio.

A signal interface 11 provides conventional signal interface functions, such as tuning, filtering, and synchronization signal removal. For purposes of the invention, the main function of interface 11 is to provide a composite Y/C signal to sampling and separation unit 12.

Sampling and separation unit 12 is discussed in detail in connection with FIGUREs 2 - 5. As discussed below, it samples the analog signal at a sampling frequency determined in accordance with the invention. This sampling frequency has a specific relationship to the color subcarrier reference burst frequency, so that color difference values can be calculated. The samples provided by sampling and separation unit 12 are in three channels, a luminance data channel and two color difference data channels.

Pixel data processor 13 prepares the data for display, by performing various processing tasks. Processor 13 includes processing memory for storing pixel data during processing. The tasks performed by processor 13 may include linearization, color space conversion, and proscan. Linearization removes the effect of gamma correction, which is performed on broadcast signals to compensate for the non-linear operation of CRT displays. Color space conversion converts the data to RGB data. Proscan converts interlaced fields of data into frames by generating new data to fill in odd or even lines. The order in which these tasks are performed may vary.

Frame memory 14 receives processed pixel data from processor 13. Frame memory 14 formats the data, on input or on output, into "bit-plane" format and delivers the bit-planes to SLM 19. The bit-plane format provides one bit at a time for each pixel of SLM 19 and permits each pixel to be turned on or off in accordance with the weight of that bit. For example, where each pixel is represented by n bits for each of three colors, there will be 3 n bit-planes per frame. Bit-planes containing less significant bits will result in shorter display times than the bit-planes containing more significant bits. A pixel value of 0 (black) results in the pixel being off for that color during the frame. For each color, each mirror element of the SLM 19 can be "on" for a duration of anywhere from 1 LSB (least significant bit) period to $2^n$-1 LSB periods. In other words, each color has $2^n$-1 time slices, during which any pixel can be on for any number of time slices between 0 and $2^n$-1.

In a typical display system 10, frame memory 14 is a double-buffer memory, which means that it has a capacity for at least two display frames. The buffer for one display frame can be read out to SLM 19 while the buffer for another display frame is being written. The two buffers are controlled in a "ping-pong" manner so that data is continuously available to SLM 19.

As stated above, this description is in terms of a display system whose SLM 19 is a digital micro-mirror device (DMD), characterized by individually addressable pixel elements, which are capable of being turned on or off simultaneously. Images are formed by addressing those pixels that are to be turned on during an image frame, and by controlling the length of time per frame that each pixel element is on. An example of an SLM is a digital mirror device (DMD), manufactured by Texas Instruments Incorporated. For purposes of this description, an SLM 19 with a vertical resolution of 480 lines is assumed. The mirror elements of the SLM 19 are square, such that for a given vertical resolution (VR) and a desired aspect ratio (AR), the horizontal resolution (HR) is determined by:

$$AR = HR / VR$$

For a 480 line display and an aspect ratio of 4:3, the number of pixels per line is:

4/3 = HR / 480
HR = 640

Light incident on SLM 19 is provided by a light source 16 and is transmitted through a rotating color wheel 15. Lens 17a focusses the source illumination, in the form of a source beam, to a "spot size" at the plane of the color wheel 15. Lens 17b directs the light to SLM 19.

In the example of FIGURE 1, color wheel 15 has three filter segments, each of a different primary color. For purposes of example herein, these colors are RGB colors: red, green, and blue. In alternative embodiments, other colors could be used and fewer or more than three colors could be used. Also, there could be more than one segment for each color. The segments need not be exactly the same size, depending on the desired color balance. The data for each color are sequenced and the display of the data is synchronized so that the portion of color wheel 15 through which light is being transmitted to SLM 19 corresponds to the data being displayed. In the example of this description, each pixel is represented by RGB data, which means that each pixel has a red value, a green value, and a blue value. As the values for each color of all pixels in a frame are being displayed, color wheel 15 rotates so that the light is transmitted through the corresponding red, blue or green filter. For each pixel, the combination of these three values is perceived as the desired color.

Color wheel 15 is attached to a shaft 15b, which is driven by motor 15a, causing color wheel 15 to rotate. A motor control unit 15c controls the speed and phase of color wheel 15. Where a frame of data is displayed for a frame period of T seconds, color wheel 15 has a period of revolution of T seconds. For example, the desired speed might be 60 revolutions per second to correspond to a 60 frame per second display rate.

Master timing unit 18 provides various system control functions. One timing signal provided by master timing unit 18 is a signal defining the display times for each bit weight of the pixel value. It may also provide the sample clock signal, at a frequency determined in accordance with the invention.

Although not illustrated in FIGURE 1, system 10 also includes a projection lens and various other optical devices for collecting and projecting the image from SLM 19 to the image plane (screen).

FIGURE 2 illustrates sampling and separation unit 12 in further detail. In the embodiment of FIGURE 2, A/D converter 21 samples the data before digital Y/C separator 22 separates the Y (luminance) from the C (chrominance) data. However, as illustrated in the alternative embodiment of FIGURE 2A, an analog Y/C separator 210 could be used instead of a digital Y/C separator 22, with two A/D converters 211 being used to sample the Y and C signals.

A/D converter 21 (FIGURE 2) and A/D converters 211 (FIGURE 2A) operate at a sampling rate in accordance with the invention. Referring to FIGURE 2, A/D converter 21 receives the composite video signal. It samples this signal at a rate determined in accordance with the invention, such that an integer number, n, of samples at the sample clock frequency is equal in time to an integer number, m, plus or minus .25, cycles at fsc. Expressed mathematically:

$$n\ T_{pc} = (m\ +/-\ .25)\ T_{sc}$$

where $T_{pc}$ is the period of the pixel (sample) clock and $T_{sc}$ is the period of the color subcarrier. For NTSC video, the subcarrier period, $T_{sc}$, is approximately .28 microseconds.

To select a sample rate, $T_{pc}$, a target sample rate is calculated and appropriate values of m and n are determined. In the example of this description, the target sample rate is 12.27 MHz, which is the sample rate that would provide 480 samples per line. The target sample rate is calculated according to the active line period and the number of pixels per line.

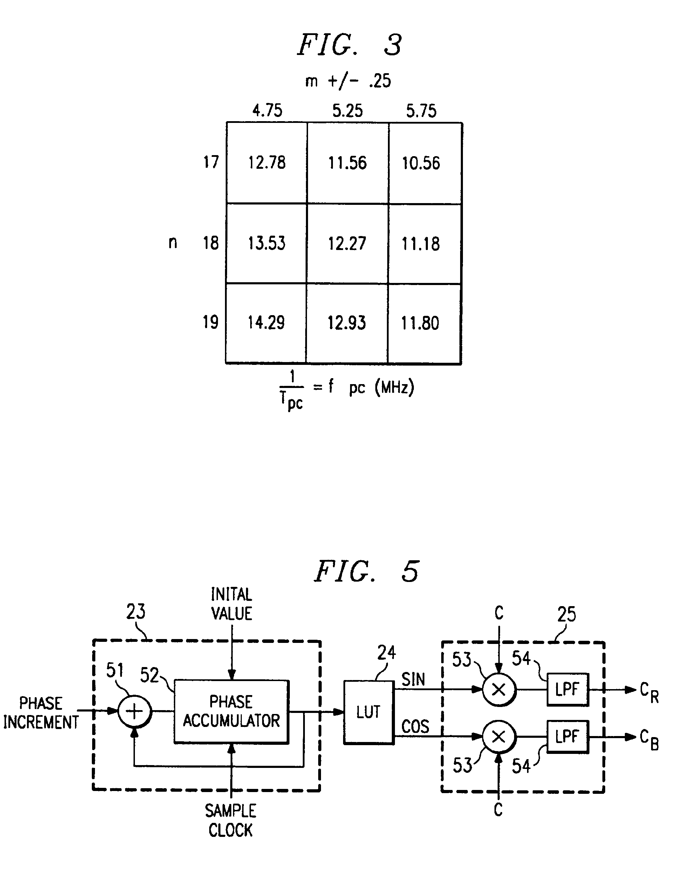

FIGURE 3 illustrates a matrix of n and m values substituted into the above equation, and the equation solved for various values of $1/T_{pc} = f_{pc}$. The calculated value of $f_{pc}$ closest to the target $f_{pc}$ is located. If the target $f_{pc}$ is 12.27 MHz, the closest sample rate is 12.27 MHz, which corresponds to m=5 and n=18. Thus, A/D converter 21 is operated at a sampling frequency of 12.27 MHz. Numbers have been rounded for convenience of description.

Referring again to FIGURE 2, Y/C separator 22 receives the sampled data and separates Y (luminance) samples from C (chrominance) samples. Y/C separator 22 may be any digital means for separating the luminance data from chrominance data. Conventional digital color separation methods may be used, such as bandpass or comb filtering.

At this point, the Y data is ready for further processing, but the C data must first be demodulated into two channels of color difference samples. The sample rate of A/D converter 21 permits signal quadrature synchronous demodulation, with the use of source source 23, look-up table 24, and demodulator 25.

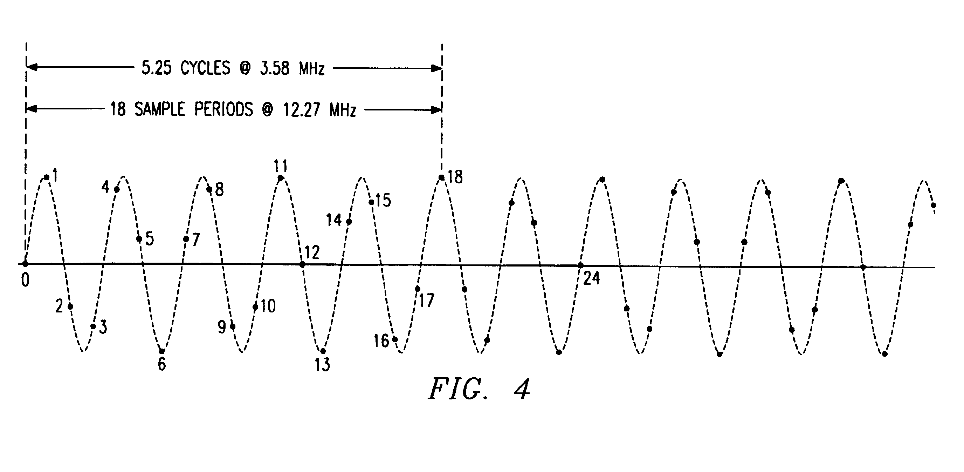

FIGURE 4 illustrates the phase relationship between the chrominance samples provided by the 12.27 MHz sample rate and the subcarrier signal at 3.58 MHz. There are 18 samples per 5.25 cycles. These samples have a definite and repeating phase relationship with the sin and cosine values of the 3.58 MHz signal. As indicated, the phase relationship repeats every 24 sample periods.

Referring again to FIGURE 2, signal source 23 or "digital oscillator 23" as used in the specification provides phase reference values to a memory 24, which then provides sin and cosine values to be multiplied times the sample values. In the example of this description, memory 24 is a look-up table (LUT) and is addressed by the phase reference values. Digital oscillator 23 accumulates phase increments each sample period, to accommodate the phase difference between the sample clock and $f_{sc}$. Each phase increment, pi, in degrees, is calculated as:

$$pi = \frac{360 * f_{sc}}{sample\ frequency} = \frac{360\ (m + .25)}{n}$$

In the example of this description, each phase increment is:

$$pi = \frac{360\ (5.25)}{18} = 105\ degrees.$$

At every sample clock signal, this increment is added to the current phase, in 360 degree cycles. Oscillator 23 could be designed so that $2^k = 360$, where K is the number of bits and so that 111...1 = 360. An initial value is provided to establish the initial phase relationship between $f_{pc}$ and $f_{sc}$. This could be accomplished by comparing the offset at 0 points of the reference and sample signals. The phase increment could be modified slightly by the measured phase and magnitude of the color burst signal to phase lock oscillator 23 to the color burst.

Referring again to FIGURE 2, the output of digital oscillator 23 drives a look-up table memory 24, which provides sin and cosine reference signals for the demodulation process. From memory 24, the sin and cosine values are delivered to a digital demodulator 25, which demodulates the chrominance data.

FIGURE 5 is a block diagram of one embodiment of digital oscillator 23, LUT 24, and demodulator 25. Digital oscillator 23 is comprised of an adder 51 and an accumulator 52. Adder 51 adds the phase increment, as calculated above, to each current phase value, and the sum is accumulated by accumulator 52. The output of accumulator 52 drives LUT 24. The sin and cosine values from LUT 24 are multiplied, using multipliers 25, by the C data. Each sample of C data is multiplied by a cosine value and a sin value, to obtain a $C_B$ and a $C_R$ value.

As an example of the operation of demodulator 25, referring to FIGURE 4, Sample 4 has a phase difference of 60 degrees (105 degrees * 4 samples = 420 degrees; 420 degrees - 360 degrees = 60 degrees). If the value of Sample 4 is x, the color difference values for Sample 4 are x(cosine 60) and x(sin 60). These values are filtered with low pass filters 54 to provide the output chrominance data.

OTHER EMBODIMENTS

Although the invention has been described with reference to specific embodiments, this description is not meant to be construed in a limiting sense. Various modifications of the disclosed embodiments, as well as alternative embodiments, will be apparent to persons skilled in the art within the scope of the appended claims.

**Claims**

1. A chrominance sampling and demodulation unit (12) for a receiver of a composite video signal having a quadrature-modulated color subcarrier signal, comprising:

   circuitry for providing sampled chrominance data, comprising a luminance-chrominance separator (22; 210), and further comprising an analog-to-digital converter (21; 211) operating at a sampling frequency such that a first integer number of samples are acquired in a time equal to the product of a second integer number, plus or minus 0.25, times the period of said subcarrier signal;
   a signal source (23) that provides phase reference values at said sampling frequency, said phase reference values each representing a phase relationship between a sample of said chrominance data and said subcarrier signal, such that each chrominance sample has an associated phase reference value;
   a memory (24) that stores sin and cosine values and matches said phase reference values to said sin and cosine values; and
   a demodulator (25) that receives said sin and cosine values and said chrominance data, multiplies each chrominance sample by a sin or a cosine value matched to the phase reference value associated with that sample, and low pass filters the product, thereby providing color difference data

   **characterized by**:

   the signal source comprises a phase accumulator for accumulating a phase increment corresponding to the ratio of the first integer number to the second integer number plus or minus 0.25.

2. The unit of Claim 1, wherein the analog-to-digital converter (21) samples the composite video signal at the sampling frequency;
   and wherein the luminance-chrominance separator comprises:

   a digital luminance-chrominance separator (22) that separates the samples from the analog-to-digital converter into sampled luminance data and said sampled chrominance data.

3. The unit of Claim 1, wherein the luminance-chrominance separator comprises an analog luminance-chrominance separator (210) that separates the composite video signal into a luminance signal and a chrominance signal;
   and wherein: the analog-to-digital converter (211) samples the chrominance signal at the sampling frequency.

4. The unit of Claim 1, wherein said memory (24) is a look-up table, addressed by said phase reference values.

5. The unit of any of Claims 1 through 4, wherein said signal source (23) comprises an adder (51) and an accumulator (52).

6. The unit of any of Claims 1 through 5, wherein said signal source (23) receives a phase increment value which it accumulates for each chrominance sample in 360 degree cycles.

7. The unit of any of Claims 1 through 6, wherein said demodulator (25) comprises a multiplier (53) and a low pass filter (54) on a first data path that provide a first color difference signal ($C_R$) and a multiplier (53) and a low pass filter (54) on a second data path that provide a second color difference signal ($C_B$).

8. The unit of Claim 1, wherein said composite video signal is an NTSC signal, such that said period of said subcarrier signal is approximately 0.28 microseconds.

9. A digital television receiver of a video signal comprising the unit of Claim 1, the receiver further comprising:

   a signal interface (11) that receives and tunes said video signal;
   a pixel processor (13) that receives said luminance data and said chrominance data and performs pixel processing tasks on said data; and
   a frame memory (14) that provides said data to a display.

10. The receiver of Claim 9, further comprising a spatial light modulator (19) that displays said data.

11. The receiver of any of Claims 9 and 10, wherein said memory (24) of said sampling and color separation unit is a look-up table, addressed by said phase reference values.

12. The receiver of any of Claims 9 through 11, wherein said signal source (23) comprises an adder (51) and an accumulator (52).

13. A method of providing color difference data in a receiver of a video signal having a quadrature-modulated color subcarrier signal, comprising the steps of:

   separating and sampling chrominance data from the video signal, at a sampling frequency such that a first integer number of samples are acquired in a time equal to the product of a second integer number, plus or minus 0.25, times the period of said subcarrier signal, to provide sampled chrominance data;
   providing phase reference values at said sampling frequency, said phase reference values each representing a phase relationship between a sample of said chrominance data and said subcarrier signal, such that each chrominance sample has an associated phase reference value;
   matching said phase reference values to sin and cosine values;
   multiplying each chrominance sample by a sin or a cosine value matched to the phase reference value associated with that sample; and
   low pass filtering the results of said multiplying step, thereby providing said color difference data;

   **characterized by**:

   accumulating a phase increment corresponding to the ratio of the first integer number to the second integer number plus or minus 0.25 to determine the phase reference values.

14. The method of Claim 13, wherein said sampling step is preceded by the step of selecting said sampling frequency such that it approximates a target sampling frequency that would produce a desired number of samples per line.

15. The method of any of Claims 13-14, wherein said matching step is performed such that each said chrominance sample is multiplied by both a sin value and a cosine value, such that each chrominance sample provides two color difference values.

16. The method of Claim 13, wherein said step of providing phase reference values is performed by accumulating the phase increment in 360 degree cycles.

17. The method of Claim 13, further **characterized by**:

   determining a target sample rate responsive to an active line period of a display and to a number of pixels per line to be displayed; and
   selecting the first and second integer numbers responsive to the target sample rate.

**Patentansprüche**

1. Chrominanzabtast- und -demodulationseinheit (12) für einen Empfänger eines Mischvideosignals (FBAS-Signals) mit einem quadraturmodulierten Farbunterträgersignal, die umfasst:

    eine Schaltungsanordnung zum Bereitstellen von abgetasteten Chrominanzdaten, die eine Luminanz/Chrominanz-Trenneinrichtung (22; 210) enthält und ferner einen Analog/Digital-Umsetzer (21; 211) enthält, der mit einer Abtastfrequenz arbeitet, derart, dass eine erste ganze Zahl von Abtastwerten in einer Zeit gesammelt werden, die gleich dem Produkt aus einer zweiten ganzen Zahl plus oder minus 0,25 mal der Periode des Unterträgersignals ist;
    eine Signalquelle (23), die Phasenreferenzwerte mit der Abtastfrequenz bereitstellt, wobei die Phasenreferenzwerte jeweils eine Phasenbeziehung zwischen einem Abtastwert der Chrominanzdaten und dem Unterträgersignal repräsentieren, derart, dass jeder Chrominanzabtastwert einen zugeordneten Phasenreferenzwert besitzt;
    einen Speicher (24), der Sinus- und Kosinuswerte speichert und die Phasenreferenzwerte an die Sinus- und Kosinuswerte anpasst; und
    einen Demodulator (25), der die Sinus- und Kosinuswerte und die Chrominanzdaten empfängt, jeden Chrominanzabtastwert mit einem Sinus- oder Kosinuswert, der an den dem Abtastwert zugeordneten Phasenreferenzwert angepasst ist, multipliziert und das Produkt einer Tiefpassfilterung unterwirft, wodurch Farbdifferenzdaten geschaffen werden;

    **dadurch gekennzeichnet, dass**:

    die Signalquelle einen Phasenakkumulator zum Akkumulieren eines Phaseninkrements enthält, das dem Verhältnis der ersten ganzen Zahl zu der zweiten ganzen Zahl plus oder minus 0,25 entspricht.

2. Einheit nach Anspruch 1, wobei der Analog/Digital-Umsetzer (21) das Mischvideosignal mit der Abtastfrequenz abtastet;
    und wobei die Luminanz/Chrominanz-Trenneinrichtung enthält:

    eine digitale Luminanz/Chrominanz-Trenneinrichtung (22), die die Abtastwerte von dem Analog/Digital-Umsetzer in abgetastete Luminanzdaten und die abgetasteten Chrominanzdaten trennt.

3. Einheit nach Anspruch 1, wobei die Luminanz/Chrominanz-Trenneinrichtung eine analoge Luminanz/Chrominanz-Trenneinrichtung (210) enthält, die das Mischvideosignal in ein Luminanzsignal und ein Chrominanzsignal trennt; und wobei der Analog/Digital-Umsetzer (211) das Chrominanzsignal mit der Abtastfrequenz abtastet.

4. Einheit nach Anspruch 1, wobei der Speicher eine Nachschlagtabelle ist, die durch die Phasenreferenzwerte adressiert wird.

5. Einheit nach einem der Ansprüche 1 bis 4, wobei die Signalquelle (23) einen Addierer (51) und einen Akkumulator (52) enthält.

6. Einheit nach einem der Ansprüche 1 bis 5, wobei die Signalquelle (23) einen Phaseninkrementwert empfängt, den sie für jeden Chrominanzabtastwert in Zyklen von 360 Grad akkumuliert.

7. Einheit nach einem der Ansprüche 1 bis 6, wobei der Demodulator (25) einen Multiplizierer (53) und ein Tiefpassfilter (54) in einem ersten Datenweg enthält, der ein erstes Farbdifferenzsignal ($C_R$) schafft, und einen Multiplizierer (53) und ein Tiefpassfilter (54) in einem zweiten Datenweg enthält, der ein zweites Farbdifferenzsignal ($C_B$) schafft.

8. Einheit nach Anspruch 1, wobei das Mischvideosignal ein NTSC-Signal ist, derart, dass die Periode des Unterträgersignals etwa 0,28 Mikrosekunden beträgt.

9. Digitaler Fernsehempfänger für ein Videosignal, der die Einheit nach Anspruch 1 enthält, wobei der Empfänger ferner umfasst:

    eine Signalschnittstelle (11), die das Videosignal empfängt und abstimmt;
    einen Pixel-Prozessor (13), der die Luminanzdaten und die Chrominanzdaten empfängt und Pixelverarbeitungsaufgaben an den Daten ausführt; und

einen Einzelbildspeicher (14), der die Daten für eine Anzeige bereitstellt.

10. Empfänger nach Anspruch 9, der ferner einen räumlichen Lichtmodulator (19) enthält, der die Daten anzeigt.

11. Empfänger nach einem der Ansprüche 9 und 10, wobei der Speicher (24) der Abtast- und Farbtrenneinheit eine Nachschlagtabelle ist, die durch die Phasenreferenzwerte adressiert wird.

12. Empfänger nach einem der Ansprüche 9 bis 11, wobei die Signalquelle (23) einen Addierer (51) und einen Akkumulator (52) enthält.

13. Verfahren zum Bereitstellen von Farbdifferenzdaten in einem Empfänger für ein Videosignal, das ein quadraturmoduliertes Farbunterträgersignal besitzt, das die folgenden Schritte umfasst:

Trennen und Abtasten von Chrominanzdaten aus dem Videosignal mit einer Abtastfrequenz, derart, dass eine erste ganze Zahl von Abtastwerten in einer Zeit erfasst werden, die gleich dem Produkt aus einer zweiten ganzen Zahl plus oder minus 0,25 mal der Periode des Unterträgersignals ist, um abgetastete Chrominanzdaten bereitzustellen;

Bereitstellen von Phasenreferenzwerten mit der Abtastfrequenz, wobei die Phasenreferenzwerte jeweils eine Phasenbeziehung zwischen einem Abtastwert der Chrominanzdaten und dem Unterträgersignal repräsentieren, derart, dass jeder Chrominanzabtastwert einen zugeordneten Phasenreferenzwert besitzt;

Anpassen der Phasenreferenzwerte an Sinus- und Kosinuswerte;

Multiplizieren jedes Chrominanzabtastwerts mit einem Sinus- oder Kosinuswert, der an den dem Abtastwert zugeordneten Phasenreferenzwert angepasst ist; und

Tiefpassfiltern der Ergebnisse des Multiplikationsschrittes, um **dadurch** die Farbdifferenzdaten zu schaffen;

**gekennzeichnet durch**:

Akkumulieren eines Phaseninkrements, das dem Verhältnis der ersten ganzen Zahl zu der zweiten ganzen Zahl plus oder minus 0,25 entspricht, um die Phasenreferenzwerte zu bestimmen.

14. Verfahren nach Anspruch 13, wobei dem Abtastschritt der Schritt des Auswählens der Abtastfrequenz vorhergeht, derart, dass sie an eine Zielabtastfrequenz angenähert wird, die eine gewünschte Anzahl von Abtastwerten pro Zeile erzeugen würde.

15. Verfahren nach einem der Ansprüche 13-14, wobei der Anpassungsschritt in der Weise ausgeführt wird, dass jeder Chrominanzabtastwert sowohl mit einem Sinuswert als auch mit einem Kosinuswert multipliziert wird, so dass jeder Chrominanzabtastwert zwei Farbdifferenzwerte ergibt.

16. Verfahren nach Anspruch 13, wobei der Schritt des Bereitstellens von Phasenreferenzwerten durch Akkumulieren des Phaseninkrements in Zyklen von 360 Grad ausgeführt wird.

17. Verfahren nach Anspruch 13, das ferner **gekennzeichnet ist durch**:

Bestimmen einer Soll-Abtastrate in Reaktion auf eine aktive Zeilenperiode einer Anzeige und auf eine Anzahl von anzuzeigenden Pixeln pro Zeile; und

Auswählen der ersten und der zweiten ganzen Zahl in Reaktion auf die Soll-Abtastrate.

**Revendications**

1. Unité d'échantillonnage de chrominance et de démodulation (12) destinée à un récepteur de signal vidéo composite ayant un signal de sous-porteuse couleur modulé en quadrature, comprenant :

des circuits destinés à fournir des données de chrominance échantillonnée, comprenant un séparateur de luminance - chrominance (22 ; 210), et comprenant de plus un convertisseur analogique - numérique (21 ; 211) fonctionnant à une fréquence d'échantillonnage telle qu'un premier nombre entier d'échantillons soient acquis en une durée égale au produit d'un second nombre entier, plus ou moins 0,25, par la période dudit signal de sous-porteuse ;

une source de signaux (23) qui fournit des valeurs de référence de phase à ladite fréquence d'échantillonnage, chacune desdites valeurs de référence de phase représentant une relation de phase entre un échantillon desdites données de chrominance et ledit signal de sous-porteuse, de telle sorte que chaque échantillon de chrominance soit associé à une valeur de référence de phase ;

une mémoire (24) qui stocke des valeurs de sinus et de cosinus et met en correspondance lesdites valeurs de référence de phase et lesdites valeurs de sinus et de cosinus ; et

un démodulateur (25) qui reçoit lesdites valeurs de sinus et de cosinus et lesdites données de chrominance, multiplie chaque échantillon de chrominance par une valeur de sinus ou de cosinus mise en correspondance avec la valeur de référence de phase associée à cet échantillon, et applique au produit un filtrage passe-bas, en fournissant de ce fait des données de différence de couleur ;

**caractérisée en ce que** :

la source de signaux comprend un accumulateur de phase destiné à accumuler un incrément de phase correspondant au rapport du premier nombre entier sur le second nombre entier plus ou moins 0,25.

2. Unité selon la revendication 1, dans laquelle le convertisseur analogique - numérique (21) échantillonne le signal vidéo composite à la fréquence d'échantillonnage ;

et dans laquelle le séparateur de luminance - chrominance comprend :

un séparateur de luminance - chrominance (22) numérique qui sépare les échantillons en provenance du convertisseur analogique - numérique en données de luminance échantillonnée et en dites données de chrominance échantillonnée.

3. Unité selon la revendication 1, dans laquelle le séparateur de luminance - chrominance comprend un séparateur de luminance - chrominance (210) analogique qui sépare le signal vidéo composite en un signal de luminance et en un signal de chrominance ;

et dans laquelle : le convertisseur analogique - numérique (211) échantillonne le signal de chrominance à la fréquence d'échantillonnage.

4. Unité selon la revendication 1, dans laquelle ladite mémoire (24) est une table de consultation adressée par lesdites valeurs de référence de phase.

5. Unité selon l'une quelconque des revendications 1 à 4, dans laquelle ladite source de signaux (23) comprend un additionneur (51) et un accumulateur (52).

6. Unité selon l'une quelconque des revendications 1 à 5, dans laquelle ladite source de signaux (23) reçoit une valeur d'incrément de phase qu'elle accumule pour chaque échantillon de chrominance dans des cycles de 360 degrés.

7. Unité selon l'une quelconque des revendications 1 à 6, dans laquelle ledit démodulateur (25) comprend un multiplicateur (53) et un filtre passe-bas (54) sur un premier chemin de données qui fournissent un premier signal de différence de couleur ($C_R$), et un multiplicateur (53) et un filtre passe-bas (54) sur un second chemin de données qui fournissent un second signal de différence de couleur ($C_B$).

8. Unité selon la revendication 1, dans laquelle ledit signal vidéo composite est un signal NTSC, de telle sorte que ladite période dudit signal de sous-porteuse est approximativement égale à 0,28 microseconde.

9. Récepteur de télévision numérique d'un signal vidéo comprenant l'unité selon la revendication 1, le récepteur comprenant de plus :

une interface de signaux (11) qui reçoit et accorde ledit signal vidéo;

un processeur de pixels (13) qui reçoit lesdites données de luminance et lesdites données de chrominance et exécute des tâches de traitement de pixels sur lesdites données ; et

une mémoire d'images (14) qui fournit lesdites données à un dispositif d'affichage.

10. Récepteur selon la revendication 9, comprenant de plus un modulateur de lumière spatial (19) qui visualise lesdites données.

**11.** Récepteur selon l'une quelconque des revendications 9 et 10, dans laquelle ladite mémoire (24) de ladite unité d'échantillonnage et de séparation couleur est une table de consultation adressée par lesdites valeurs de référence de phase.

**12.** Récepteur selon l'une quelconque des revendications 9 à 11, dans laquelle ladite source de signaux (23) comprend un additionneur (51) et un accumulateur (52).

**13.** Procédé de fourniture de données de différence de couleur dans un récepteur d'un signal vidéo ayant un signal de sous-porteuse couleur modulé en quadrature, comprenant les étapes consistant à :

séparer et échantillonner des données de chrominance provenant du signal vidéo, à une fréquence d'échantillonnage telle qu'un premier nombre entier d'échantillons soient acquis en une durée égale au produit d'un second nombre entier, plus ou moins 0, 25, par la période dudit signal de sous-porteuse, de manière à fournir des données de chrominance échantillonnée ;
fournir des valeurs de référence de phase à ladite fréquence d'échantillonnage, chacune desdites valeurs de référence de phase représentant une relation de phase entre un échantillon desdites données de chrominance et ledit signal de sous-porteuse, de telle sorte que chaque échantillon de chrominance soit associé à une valeur de référence de phase ;
mettre en correspondance lesdites valeurs de référence de phase et les valeurs de sinus et de cosinus ;
multiplier chaque échantillon de chrominance par une valeur de sinus ou de cosinus mise en correspondance avec la valeur de référence de phase associée à cet échantillon ; et
filtrer de manière passe-bas les résultats de ladite étape de multiplication, en fournissant de ce fait lesdites données de différence de couleur;

**caractérisé par** :

une étape consistant à accumuler un incrément de phase correspondant au rapport du premier nombre entier sur le second nombre entier plus ou moins 0,25 de manière à déterminer les valeurs de référence de phase.

**14.** Procédé selon la revendication 13, dans lequel ladite étape d'échantillonnage est précédée par l'étape consistant à sélectionner ladite fréquence d'échantillonnage de telle sorte qu'elle approche une fréquence d'échantillonnage cible qui produirait un nombre désiré d'échantillons par ligne.

**15.** Procédé selon l'une quelconque des revendications 13 et 14, dans laquelle ladite étape de mise en correspondance est exécutée de telle sorte que chaque dit échantillon de chrominance soit multiplié par une valeur de sinus et une valeur de cosinus, de telle sorte que chaque échantillon de chrominance fournisse deux valeurs de différence de couleur.

**16.** Procédé selon la revendication 13, dans lequel ladite étape consistant à fournir des valeurs de référence de phase est exécutée en accumulant l'incrément de phase dans des cycles de 360 degrés.

**17.** Procédé selon la revendication 13, **caractérisé de plus par** les étapes consistant à :

déterminer une fréquence d'échantillonnage cible sensible à une période de ligne active d'un dispositif d'affichage et à un certain nombre de pixels par ligne à afficher ; et
sélectionner le premier et le second nombres entiers en fonction de la fréquence d'échantillonnage cible.

COLOR WHEEL

*FIG. 1*

18 TIMING

15a 15b 15

16

17a 17b 17c

SLM

19

10

14 FRAME MEMORY/ FORMAT

13 PROCESSOR

12 S/D AND SEPARATOR

11 SIGNAL I/F

SCREEN

*FIG. 2*

COMPOSITE VIDEO

21 A/D

22 Y/C SEPARATOR

Y

C

SAMPLE CLK

SAMPLE CLK

23 DIGITAL OSCILLATOR

INITIAL VALUE

PHASE INCREMENT

PHASE REFERENCE

24 LUT MEMORY

SIN

COS

25 DEMODULATOR

$C_R$

$C_B$

*FIG. 2A*

211

Y/C SEPARATOR

Y

C

A/D

A/D

Y

C TO DEMODULATOR

210

211

## FIG. 3

m +/- .25

|   | 4.75 | 5.25 | 5.75 |
|---|------|------|------|
| 17 | 12.78 | 11.56 | 10.56 |
| n  18 | 13.53 | 12.27 | 11.18 |
| 19 | 14.29 | 12.93 | 11.80 |

$$\frac{1}{T_{pc}} = f \ pc \ (MHz)$$

## FIG. 5

FIG. 4

**REFERENCES CITED IN THE DESCRIPTION**

**Patent documents cited in the description**

- US 5347321 A
- US 4700217 A
- US 5079544 A
- US 5526051 A
- US 5452024 A